# EUROPEAN PATENT SPECIFICATION

(11) **EP 3 224 123 B1**
(45) Date of publication and mention of the grant of the patent: **20.11.2019**
(21) Application number: 15810769.8
(22) Date of filing: 24.11.2015
(51) Int. Cl.: B62D 35/00

(54) **AERODYNAMIC DEVICE FOR REDUCING THE DRAG OF TERRESTRIAL VEHICLES**
AERODYNAMISCHE VORRICHTUNG ZUM REDUZIEREN DES WIDERSTAND VON BODENGEBUNDENEN FAHRZEUGEN
DISPOSITIF AÉRODYNAMIQUE POUR RÉDUIRE LA TRAÎNÉE DE VÉHICULES TERRESTRES

(30) Priority: 27.11.2014 IT MI20142044
(43) Date of publication of application: 04.10.2017
(73) Proprietor: Politecnico di Milano, 20133 Milano (IT)
(72) Inventor: SALATI, Luigi, I-20023 Cerro Maggiore (MI) (IT); SCHITO, Paolo, I-20159 Milan (IT); CHELI, Federico, I-20144 Milan (IT)
(74) Representative: Gregorj S.r.l.
(86) International application number: PCT/IB2015/059080
(87) International publication number: WO 2016/083997

(56) References cited:
- GB-A- 2 347 903
- GB-A- 2 403 462
- US-A- 4 458 936
- US-A1- 2008 093 886
- US-A1- 2013 076 064

## Description

### Technical field of the invention

The present invention refers to an aerodynamic device for reducing the drag of terrestrial vehicles, such as trucks, trains, or similar.

The term "drag" refers to the aerodynamic resistance affecting a vehicle due to the relative speed between the air and the vehicle itself during the forward motion of the latter. Such drag force increases with the square of the speed, said relative speed being proportional to a drag coefficient typical of each vehicle.

### Prior art

The drag force is one of the main forces opposing to the forward motion of a vehicle. The larger the drag force acting on the vehicle, the greater its fuel consumption will be. Such problem is particularly felt in the trucking field, wherein the fuel cost is relevant. The high fuel consumption further entails hazardous emissions to the environment which would be better to limit.

In order to reduce the drag force and therefore the fuel consumptions, vehicles, such as trucks, are equipped with aerodynamic appendages for reducing the resistance to the forward motion due to the drag, in other words to reduce the drag coefficient of the vehicle. For example, it is known to provide lateral fairings and/or wheels fairings, since such areas and the vehicle bottom are critical due to the vortexes forming during the motion, which in turn cause a substantial drag.

Further aerodynamic devices to be installed between the truck tractor and the trailer of a truck for reducing the aerodynamic resistance, particularly in case of a wind transversal to the forward motion truck direction, are known.

Further known aerodynamic devices include a fairing to be positioned above the truck tractor in order to convey the air above the trailer, in order to therefore limit the resistance generated by the upwardly projecting portion of the trailer, generally higher than the track tractor. A drag reducing device according to the preamble of claim 1 is disclosed in US 2013/076064.

### Summary of the invention

It is an object of the present invention to make available an aerodynamic device enabling to further reduce the drag of terrestrial vehicles, which has a simple construction, and therefore a limited cost, and which can be further directly integrated in new vehicles when they are manufactured, or applied as an external appendage on already existent vehicles.

This and other objects are met by an aerodynamic device for reducing the drag of terrestrial vehicles according to claim 1.

Dependent claims define possible advantageous embodiments of the invention.

### Brief description of the figures

In order to better understand the invention and appreciate its advantages, in the following some exemplifying and non limiting embodiments thereof will be described with reference to the accompanying figures, wherein:
Figure 1 is a schematic axonometric view of an aerodynamic device for reducing the drag of terrestrial vehicles according to a possible embodiment of the invention;
Figure 2 is a front schematic view of the device of Figure 1;
Figures 3a-3c are schematic lateral views of trucks provided with one, two and three devices respectively, according to the invention;
Figures 4a-4f are schematic illustrations of outlines of an aerodynamic surface of the device according to possible alternative embodiments of the invention.

### Detailed description of the invention

Referring to the figures, an aerodynamic device for reducing the drag of terrestrial vehicles is indicated with reference 1. The device 1 is adapted to be applied on an existing vehicle, or can be integrated in the same when it is assembled. For example, the device 1 can be applied or integrated in a truck, particularly on its trailer, as will be better described in the following. Obviously, the device 1, according to the invention, can be applied or integrated also in terrestrial vehicles of a different type, for example trains, particularly cars or locomotives.

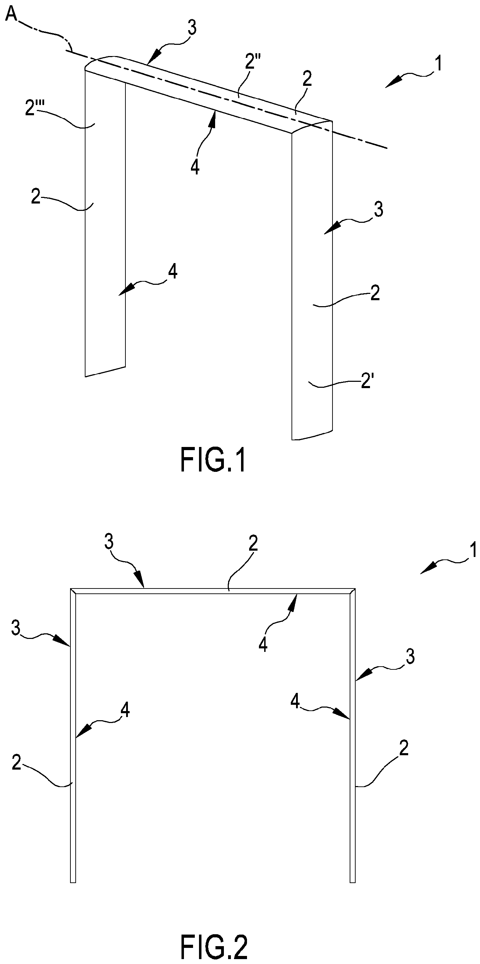

The device 1 comprises at least one aerodynamic appendage 2 having the function of reducing the vehicle drag, in other words its drag coefficient when the device is mounted on the same. With reference for example to the embodiment illustrated in Figures 1 and 2, the device comprises three aerodynamic appendages 2', 2", 2''' made in one piece, sequentially connected to each other and placed normal to each other. Alternatively, the aerodynamic appendages can be in a number different from three or can be separated from each other or connected to each other in a different way. Still referring to the embodiment of Figures 1 and 2, for example, the device can be divided in two blocks, the aerodynamic central appendage 2" being divided in two portions, in order to have two portions respectively comprising the first appendage 2' and a portion of the second appendage 2", and the third appendage 2''' and a further portion of the second appendage 2". Such arrangement makes easier to mount the device to the vehicle.

Now, referring to the single aerodynamic appendage 2, it develops according to a longitudinal axis A, preferably a rectilinear axis (alternatively the longitudinal axis A can be non rectilinear). Each aerodynamic appendage 2 comprises a first aerodynamic surface 3 adapted to interact with the aerodynamic flow formed around the vehicle when this latter, equipped with the device 1, is running. The first aerodynamic surface 3 exhibits an outline specifically designed for reducing the vehicle drag as it will be explained in the following.

The aerodynamic appendage 2 further comprises a second coupling surface 4, opposite to the first aerodynamic surface 3, which is adapted to fixedly couple the device to the vehicle, particularly is adapted to face a respective coupling surface of the vehicle. The second coupling surface can be flat, as shown in the embodiments of Figures 1 and 2, or alternatively can have different shapes for being coupled to non planar surfaces. According to a further variant, the aerodynamic appendage 2 can be obtained by bending a flat pate and, in such case, the second coupling surface 4 substantially follows the trend of the first aerodynamic surface 3.

The second coupling surface 4 can be equipped with suitable connecting means (not shown in the figures) for fixedly or removably coupling the device to the vehicle. In this second case, the device 1 can be moved from a vehicle to another.

Referring to the embodiment of Figures 1 and 2, the first aerodynamic surfaces 3 of the three aerodynamic appendages 2', 2", 2''' face the outside of the U-shaped device, while the second coupling surfaces 4 face the inside of the device. The device 1 with such shape, is particularly adapted to be connected to the trailer of a truck, having the typical substantially parallelepiped shape, at the lateral and upper surfaces. Particularly, the first 2', second 2" and third aerodynamic appendages 2''' can be respectively positioned on a first lateral surface, on the upper surface and on a second lateral surface of the trailer.

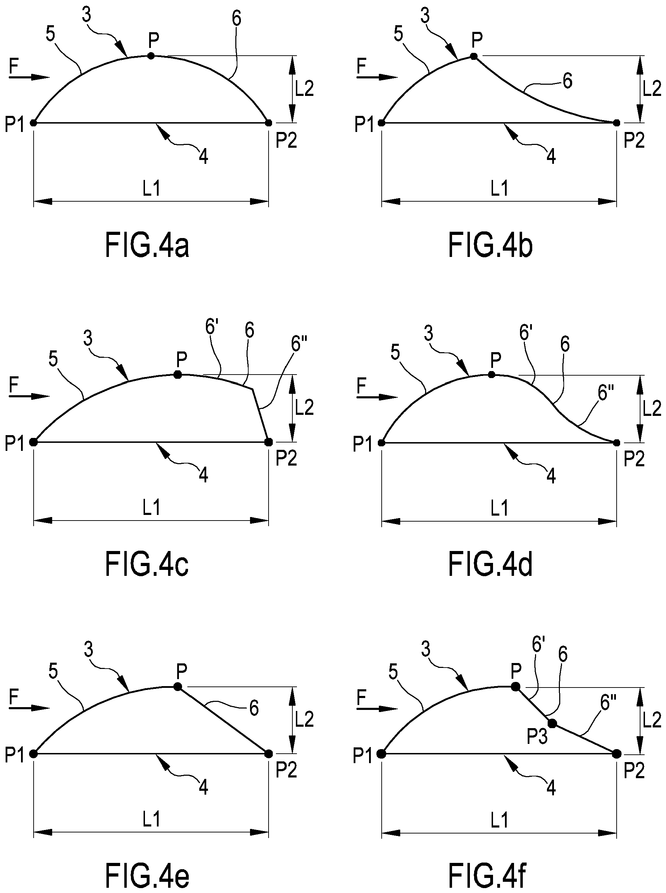

Now, referring to Figures 4a-4f, they show possible outlines of the first aerodynamic surface 3 along cross-sections of the aerodynamic appendage 2, taken in a plane normal to the longitudinal axis A thereof. Preferably, the outline of the first aerodynamic surface is constant in each aerodynamic appendage along the whole development length along the longitudinal axis A. Possibly, the outline can vary at the end areas for being radiused with following aerodynamic appendages, for example by welding.

In all the described embodiments, the outline exhibits a first length 5 and a second length 6. The first length 5 of the outline is adapted to face the front portion of the vehicle when he device is mounted, while the second length 6 is adapted to face the back portion. It is to be observed that in the present description and in the accompanying claims, the terms "front" and "back" refer to the normal forward motion of the vehicle, so that, for example, with reference to a truck, the front portion corresponds to the side of the truck where the tractor is located and the back portion is the portion opposite to the front portion. In Figures 4a-4f, the arrow F schematically shows the direction of the relative speed of the air with respect to the device when the vehicle is forward moving.

In all the shown embodiments, the first length 5 of the outline is increasing, from a point P1, away from the second coupling surface 4 (schematically shown with a rectilinear length) to a maximum point P. Instead, the second length 6 is decreasing from the point P on approach to the second coupling surface to a point P2.

The first outline length 5, which is hit by the air flow, is convex. Preferably, it is devoid of discontinuity points. According to a possible embodiment, the first outline length 5 is shaped as an elliptical arc. Alternatively, the first outline length 5 can be shaped as a curve different from an elliptical one, but which substantially approximates the outline thereof, for example a polynomial curve having suitable coefficients.

The second length 6 can be variably configured.

According to the embodiment illustrated in Figure 4a, also the second length 6 is convex and devoid of discontinuity points. Particularly, according to this embodiment, the overall outline of the first aerodynamic surface 3 is totally convex and devoid of discontinuity points. Preferably, the outline of the first aerodynamic surface 3 is generally semi-elliptical, or shaped as a curve substantially approximating the outline thereof, for example a polynomial curve. It is observed that, in the embodiment illustrated in Figure 4, the first length 5 and second length 6 of the first aerodynamic surface are symmetrical to each other. However, according to a not illustrated alternative variant, they can be asymmetrical. Particularly, the first length 5 can be shaped as a quarter of an ellipse having a first radius (considered as the distance between the point P1 and the projection of point P on the segment P1-P2) and the second length can be shaped as a quarter of an ellipse having a second radius (considered as the distance between the projection of point P on the segment P1-P2), wherein the second radius is greater than the first radius. According to this variant, the first aerodynamic surface 3 is generally convex and the first 5 and second lengths 6 are continuously connected, in other words without discontinuity points.

According to the embodiment illustrated in Figure 4b, the second length 6 of the outline is totally concave and devoid of discontinuity points. The maximum point P is a discontinuity point between the first 5 and second length 6 of the outline.

According to the embodiment shown in Figure 4c, the second outline length 6 comprises a first 6' and second portions 6". The first portion 6' is continuously followed by the first length 5 and is also convex. The second portion 6" is rectilinear. Alternatively, according to a not illustrated variant, the second portion 6" of the second length 6 can be also concave or convex.

According to an embodiment illustrated in Figure 4d, the second outline length 6 comprises a first 6' and second portions 6". The first portion 6' is continuously followed by the first length 5 and is also convex. The second portion 6" is concave and is continuously connected to the first portion 6'. For example, the second outline length 6 can have a sinusoidal trend or can be configured as a curve approximating a sinusoidal trend.

According to the embodiment illustrated in Figure 4e, the second outline length 6 is rectilinear. The maximum point P is a discontinuity point between the first 5 and second outline length 6.

According to the embodiment illustrated in Figure 4f, the second outline length 6 comprises a first 6' and second portions 6", both rectilinear. There are also present discontinuity points at the maximum point P and the intermediate point P3 between the first 6' and second portions 6" of the second outline length 6. The second outline length 6 is generally concave, but alternatively, according to a not illustrated variant, can be convex.

Obviously, as it will be better understood to the person skilled in the art, further not explicitly described shapes of the outline of the first aerodynamic surface 3, besides the explicitly cited ones, are possible.

The outline of the first aerodynamic surface 3 has a longitudinal extension L1, measured between the previously defined points P1 and P2, and has a height L2 measured between the maximum point P and the line joining the points P1 and P2. Advantageously, the length L1 and height L2 have a ratio comprised between 1 and 12, preferably comprised between 8 and 10. According to a preferred embodiment, such ratio is equal to 9. Such ratio is particularly advantageous when the first aerodynamic surface 3 has the shape described with reference to the embodiment of Figure 4a, in other words generally semi-elliptical or having an outline configured as a curve approximating a semi-elliptical trend. Such ratio between the length L1 and height L2, falling in the range and having the above given values, is in any case suitable to reduce the drag also in case of shapes different from the first aerodynamic surface 3, for example the ones described with reference to Figures 4b-4f.

The device 1, according to the invention, can be made of different materials. For example, the device can be made of a material selected in the group comprising: aluminum; steel; polymeric materials; plastic materials; vinyl materials; composite materials; fiberglass.

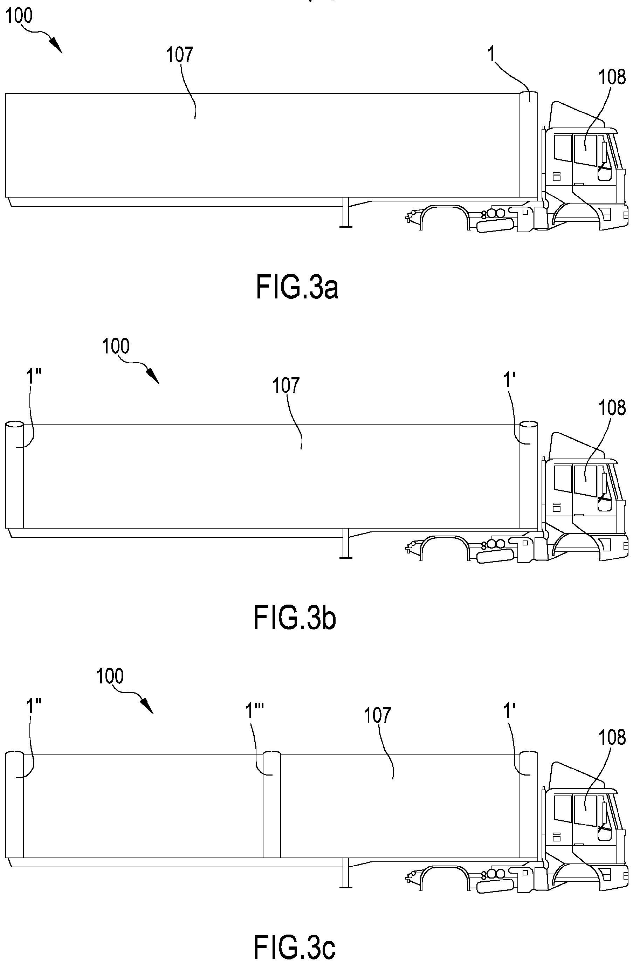

Figures 3a-3c illustrate a truck 100, comprising a tractor 108 and a trailer 107, on which one or more devices of the type shown in Figures 1 and 2 are mounted.

In Figure 3a, the truck 100 comprises a single device 1 located at the front end of the trailer 107. Particularly, the device 1 is preferably located at the edge of the front end of the trailer (with reference to Figures 4a-4f, this means that the point P1 is preferably located at such edge).

In Figure 3b, the truck comprises a first device 1' located at the front end of the trailer 107 and a second device 1" located at the back end of the trailer 107.

In Figure 3c, the truck comprises a first device 1' located at the front end of the trailer 107, a second device 1" located at the back end of the truck, and a third device 1''' located in a position intermediate between the first 1' and second devices 1".

Obviously, it is possible to provide the devices in a number and in positions different from what has been illustrated before in an exemplifying way.

In vehicles, for example trucks, devoid of a device according to the invention, particularly in the trailer area, it has been observed that the air flow cyclically separates from and joins the trailer surface along its length. This phenomenon generates a dissipation of energy and increases the vehicle drag.

The vehicle according to the invention enables to move away from the vehicle surface, particularly the trailer, the flow separation point. In this way, the air flow around the trailer, in proximity of it, is not subjected to the above cited joining and separation phenomenon and therefore the general drag of the vehicle decreases.

Further, it was verified that the general drag of the vehicle on which a device according to the invention is installed, decreases also in case the vehicle is hit by a lateral wind.

The device 1, according to the invention, has a simple structure, therefore the cost is limited, and can be integrated in new vehicles during their assembly or can be applied as an external appendage on existent vehicles. The device 1 enables to reduce the general drag of the vehicle with a consequent fuel saving and less hazardous emissions to the environment.

## Claims

1. Aerodynamic device (1) for reducing the drag of terrestrial vehicles, comprising at least one aerodynamic appendage (2) extending along a longitudinal axis (A), said at least one aerodynamic appendage (2) comprising:
- at least one first aerodynamic surface (3) adapted to interact with the aerodynamic flow around said vehicle;
- a second coupling surface (4) facing away from the first aerodynamic surface (3), adapted to fixedly couple the device (1) to a portion of said vehicle;
wherein said first aerodynamic surface (3), in a cross-section along a plane normal to said longitudinal axis (A), has an outline comprising:
- a first length (5) adapted to face the front portion of the vehicle, gradually increasing to a maximum point (P); and
- a second length (6) adapted to face the back portion of the vehicle, gradually decreasing from said maximum point (P);
wherein at least said first length (5) of the first aerodynamic surface (3) is convex, **characterized in that** said outline of the first aerodynamic surface (3) is semi-elliptical and **in that** said outline of the first aerodynamic surface (3) has a longitudinal extension (L1) between the starting point (P1) of the first length (3) and the final point (P2) of the second length (4), and a height (L2) between the maximum point (P) and the line joining the starting point (P1) of the first length (3) and the final point (P2) of the second length (6), wherein the longitudinal extension (L1) and height (L2) have a ratio L1/L2 comprised between 8 and 10.

2. Aerodynamic device (1) according to claim 1, wherein at least said first length (5) of the first aerodynamic surface (3) is devoid of discontinuity points.

3. Aerodynamic device (1) according to claim 1 or 2, wherein said outline of the first aerodynamic surface is globally convex.

4. Aerodynamic device (1) according to any of the preceding claims, wherein said outline of the first aerodynamic surface (3) is devoid of discontinuity points.

5. Aerodynamic device (1) according to any of the preceding claims, wherein the longitudinal extension (L1) and height (L2) have a ratio L1/L2 equal to 9.

6. Aerodynamic device (1) according to any of the preceding claims, comprising three of said aerodynamic appendages (2) orthogonally located one after the other, so that the device (1) is globally substantially U-shaped.

7. Terrestrial vehicle comprising at least one aerodynamic device (1) for reducing the drag according to any of the preceding claims.

8. Terrestrial vehicle according to the preceding claim, wherein said terrestrial vehicle is a truck (100) comprising a trailer (107), said aerodynamic device being associated or associable to said trailer (107).

9. Terrestrial vehicle according to the preceding claim, comprising a first aerodynamic device (1') located at the front end of the trailer (107) and a second device (1") located at the back end of the trailer (107).

## Patentansprüche

1. Aerodynamische Vorrichtung (1) zum Reduzieren des Widerstands von bodengebundenen Fahrzeugen, die mindestens einen aerodynamischen Ansatz (2) umfasst, der sich entlang einer Längsachse (A) erstreckt, wobei der mindestens eine aerodynamische Ansatz (2) Folgendes umfasst:
- mindestens eine erste aerodynamische Oberfläche (3), die mit der aerodynamischen Strömung um das Fahrzeug herum in Wechselwirkung treten kann;
- eine zweite Kopplungsoberfläche (4), die von der ersten aerodynamischen Oberfläche (3) weg gerichtet ist, und die dazu angepasst ist, die Vorrichtung (1) fest mit einem Abschnitt des Fahrzeugs zu verbinden;
wobei die erste aerodynamische Oberfläche (3) in einem Querschnitt entlang einer Ebene senkrecht zur Längsachse (A) eine Kontur aufweist, die Folgendes umfasst:
- eine erste Länge (5), die dazu angepasst ist, dem vorderen Abschnitt des Fahrzeugs zugewandt zu sein und sich allmählich bis zu einem maximalen Punkt (P) erhöht; und
- eine zweite Länge (6), die dazu angepasst ist, dem hinteren Abschnitt des Fahrzeugs zugewandt zu sein und die von dem maximalen Punkt (P) aus allmählich abnimmt;
wobei mindestens die erste Länge (5) der ersten aerodynamischen Oberfläche (3) konvex ist, **dadurch gekennzeichnet, dass** die Kontur der ersten aerodynamischen Oberfläche (3) halbelliptisch ist und **dass** die Kontur der ersten aerodynamischen Oberfläche (3) eine Längsausdehnung (L1) zwischen dem Startpunkt (P1) der ersten Länge (3) und dem Endpunkt (P2) der zweiten Länge (4), und eine Höhe (L2) zwischen dem Maximalpunkt (P) und der den Startpunkt (P1) der ersten Länge (3) und dem Endpunkt (P2) der zweiten Länge (6) verbindenden Linie aufweist, wobei die Längsausdehnung (L1) und die Höhe (L2) ein Verhältnis L1/L2 zwischen 8 und 10 aufweisen.

2. Aerodynamische Vorrichtung (1) nach Anspruch 1, wobei mindestens die erste Länge (5) der ersten aerodynamischen Oberfläche (3) frei von Unterbrechungspunkten ist.

3. Aerodynamische Vorrichtung (1) nach Anspruch 1 oder 2, wobei die Kontur der ersten aerodynamischen Oberfläche allgemein konvex ist.

4. Aerodynamische Vorrichtung (1) nach einem der vorangehenden Ansprüche, wobei die Kontur der ersten aerodynamischen Oberfläche (3) frei von Unterbrechungspunkten ist.

5. Aerodynamische Vorrichtung (1) nach einem der vorangehenden Ansprüche, wobei die Längsausdehnung (L1) und die Höhe (L2) ein Verhältnis L1/L2 gleich 9 aufweisen.

6. Aerodynamische Vorrichtung (1) nach einem der vorangehenden Ansprüche, die drei der aerodynamischen Ansätze (2) umfasst, die sich orthogonal hintereinander befinden, so dass die Vorrichtung (1) allgemein im Wesentlichen eine U-Form aufweist.

7. Bodengebundenes Fahrzeug, das mindestens eine aerodynamische Vorrichtung (1) zum Reduzieren des Widerstands nach einem der vorangehenden Ansprüche umfasst.

8. Bodengebundenes Fahrzeug nach dem vorangehenden Anspruch, wobei das bodengebundene Fahrzeug ein Lastwagen (100) ist, der einen Anhänger (107) umfasst, wobei die aerodynamische Vorrichtung dem Anhänger (107) zugeordnet oder zuordenbar ist.

9. Bodengebundenes Fahrzeug nach dem vorangehenden Anspruch, das eine erste aerodynamische Vorrichtung (1') am vorderen Ende des Anhängers (107) und eine zweite Vorrichtung (1") am hinteren Ende des Anhängers (107) umfasst.

## Revendications

1. Dispositif aérodynamique (1) pour réduire la traînée de véhicules terrestres, comprenant au moins un appendice aérodynamique (2) s'étendant suivant un axe longitudinal (A), ledit au moins un appendice aérodynamique (2) comprenant :
- au moins une première surface aérodynamique (3) adaptée pour interagir avec le flux aérodynamique autour dudit véhicule ;
- une seconde surface d'accouplement (4) opposée à la première surface aérodynamique (3), adaptée pour accoupler de manière fixe le dispositif (1) à une partie dudit véhicule ;
dans lequel ladite première surface aérodynamique (3), dans une section transversale suivant un plan perpendiculaire audit axe longitudinal (A), présente un contour comprenant :
- une première longueur (5) adaptée pour faire face à la partie avant du véhicule, en augmentant progressivement jusqu'à un point maximum (P) ; et
- une seconde longueur (6) adaptée pour faire face à la partie arrière du véhicule, diminuant progressivement à partir dudit point maximum (P) ;
dans lequel au moins ladite première longueur (5) de la première surface aérodynamique (3) est convexe, **caractérisé en ce que** ledit contour de la première surface aérodynamique (3) est semi-elliptique et **en ce que** ledit contour de la première surface aérodynamique (3) comporte une extension longitudinale (L1) entre le point de départ (P1) de la première longueur (3) et le point final (P2) de la seconde longueur (4), et une hauteur (L2) entre le point maximum (P) et la ligne reliant le point de départ (P1) de la première longueur (3) et le point final (P2) de la seconde longueur (6), l'extension longitudinale (L1) et la hauteur (L2) présentant un rapport L1/L2 compris entre 8 et 10.

2. Dispositif aérodynamique (1) selon la revendication 1, dans lequel au moins ladite première longueur (5) de la première surface aérodynamique (3) est dépourvue de points de discontinuité.

3. Dispositif aérodynamique (1) selon la revendication 1 ou 2, dans lequel ledit contour de la première surface aérodynamique est globalement convexe.

4. Dispositif aérodynamique (1) selon l'une quelconque des revendications précédentes, dans lequel ledit contour de la première surface aérodynamique (3) est dépourvu de points de discontinuité.

5. Dispositif aérodynamique (1) selon l'une quelconque des revendications précédentes, dans lequel l'extension longitudinale (L1) et la hauteur (L2) présentent un rapport L1/L2 égal à 9.

6. Dispositif aérodynamique (1) selon l'une quelconque des revendications précédentes, comprenant trois desdits appendices aérodynamiques (2) situés orthogonalement l'un après l'autre, de sorte que le dispositif (1) présente globalement une forme sensiblement en U.

7. Véhicule terrestre comprenant au moins un dispositif aérodynamique (1) pour réduire la traînée selon l'une quelconque des revendications précédentes.

8. Véhicule terrestre selon la revendication précédente, ledit véhicule terrestre étant un camion (100) comprenant une remorque (107), ledit dispositif aérodynamique étant associé ou pouvant être associé à ladite remorque (107).

9. Véhicule terrestre selon la revendication précédente, comprenant un premier dispositif aérodynamique (1') se trouvant à l'extrémité avant de la remorque (107) et un second dispositif (1") se trouvant à l'extrémité arrière de la remorque (107).
